(19) Europäisches Patentamt
European Patent Office
Office européen des brevets

(11) EP 2 575 452 B1

(12) **EUROPEAN PATENT SPECIFICATION**

(45) Date of publication and mention of the grant of the patent:
**19.12.2018 Bulletin 2018/51**

(21) Application number: **11787199.6**

(22) Date of filing: **23.05.2011**

(51) Int Cl.:
***A01N 35/02*** *(2006.01)* ***A01N 47/46*** *(2006.01)*
***B65B 31/00*** *(2006.01)* ***A01P 3/00*** *(2006.01)*
***A01P 1/00*** *(2006.01)*

(86) International application number:
**PCT/US2011/037600**

(87) International publication number:
**WO 2011/149851 (01.12.2011 Gazette 2011/48)**

(54) **ANTIMICROBIAL COMPOSITIONS**

ANTIMIKROBIELLE ZUSAMMENSETZUNGEN

COMPOSITIONS ANTIMICROBIENNES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.05.2010 US 347439 P**

(43) Date of publication of application:
**10.04.2013 Bulletin 2013/15**

(73) Proprietor: **Takasago International Corporation**
**Tokyo-to 144-8721 (JP)**

(72) Inventors:
- **KANG, Raphael, KL.**
  **Leonia**
  **NJ 07605 (US)**
- **CILIA, Alba, T.**
  **River Edge**
  **NJ 07661 (US)**

(74) Representative: **Carpmaels & Ransford LLP**
**One Southampton Row**
**London WC1B 5HA (GB)**

(56) References cited:
**EP-A1- 0 557 946** **EP-A1- 0 687 412**
**WO-A1-99/22751** **WO-A1-2007/004389**
**US-A- 4 440 783** **US-A- 5 334 373**
**US-A- 5 703 124** **US-A- 5 880 150**
**US-A- 6 029 286** **US-A1- 2003 031 588**
**US-A1- 2007 020 364** **US-A1- 2008 221 003**
**US-B1- 6 656 303**

- **TZORTZAKIS ET AL: "Antifungal activity of lemongrass (Cympopogon citratus L.) essential oil against key postharvest pathogens", INNOVATIVE FOOD SCIENCE AND EMERGING TECHNOLOGIES, ELSEVIER, AMSTERDAM, NL, vol. 8, no. 2, 17 April 2007 (2007-04-17), pages 253-258, XP022032332, ISSN: 1466-8564, DOI: 10.1016/J.IFSET.2007.01.002**
- **D. Trombetta ET AL: "Study on the mechanisms of the antibacterial action of some plant alpha,beta-unsaturated aldehydes", Letters in Applied Microbiology, vol. 35, no. 4, 1 October 2002 (2002-10-01), pages 285-290, XP055217807, ISSN: 0266-8254, DOI: 10.1046/j.1472-765X.2002.01190.x**
- **BEILFUSS W: "VERGLEICHENDE UNTERSUCHUNGEN DER ANTIMIKROBIELLEN WIRKSAMKEIT ALPHA,BETA-UNGESTAETTIGTER ALDEHYDE//COMPARATIVE STUDIES ON THE ANTIMICROBIAL ACTIVITY OF ALPHA-BETA-UNSATURATED ALDEHYDES", ZENTRALBLATT FUER BAKTERIOLOGIE, PARASIETENKUNDE,INFEKTIONSKRANKHEITEN UND HYGIENE. 1. ABTEILUNG. ORIGINALE.REIHE A, MEDIZINISCHE MIKROBIOLOGIE UND PARASITOLOGIE, FISCHER, STUTTGART, DE, vol. 234, no. 2, 1 January 1976 (1976-01-01), pages 271-280, XP001062893, ISSN: 0300-9688**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



**(Cont. next page)**

Remarks:

The file contains technical information submitted after the application was filed and not included in this specification

## Description

### FIELD

The disclosed subject matter relates to compositions having antimicrobial activity, and methods of reducing the antimicrobial activity of a solid, liquid or surrounding air space that employ such compositions.

### BACKGROUND

Mustard essential oil (MEO) has been described as a defense mechanism against herbivores in plants of the *Crucifereae* family. While the antimicrobial activity of MEO and its primary component allyl isothiocyanate (AIT), individually, has been reported in various studies, there remains a need for antimicrobial compositions with increased efficacy, and that reduce the amount of MEO required to achieve sufficient antimicrobial activity. There also remains a need for antimicrobial compositions that are active against gram-negative and gram-positive bacteria in the vapor phase.
WO 99/22751 discloses a chemical composition comprising heat components, mustard oil, lemon extract, vegetable oil and surfactants.

### SUMMARY

It has been found that the combination of an aliphatic aldehyde and allyl isothiocyanate, the active component of mustard essential oil, provides increased antimicrobial activity against both gram-negative and gram-positive bacteria. Accordingly, one aspect of the presently disclosed subject matter provides an antimicrobial composition that includes at least one aliphatic aldehyde component and allyl isothiocyanate.
The invention is defined in the claims. The aliphatic aldehyde component is a $C_6$-$C_{13}$ straight chained aliphatic aldehyde.
These aldehyde components can be unsaturated (e.g., $\alpha$, $\beta$ unsaturated aldehyde). The allyl isothiocyanate can be obtained from mustard essential oil, it can be obtained from other sources, or added as a pure, or relatively pure component to the antimicrobial composition.
In one embodiment, the antimicrobial composition includes from about 5 wt% to about 40 wt%, or from about 8 wt% to about 12 wt%, of an unsaturated or saturated $C_6$-$C_{13}$ straight-chained aliphatic aldehyde.
Another aspect of the presently disclosed subject matter provides a method of reducing the bacterial activity of an environment that includes applying any one (or more) of the antimicrobial composition of the present application. In one embodiment the antimicrobial composition is applied in the vapor phase (e.g., the composition is allowed to evaporate within a relatively confined space).
Another aspect of the presently disclosed subject matter provides a method of preserving a product against spoilage that includes applying any one (or more) of the antimicrobial composition of the present application. Another aspect of the presently disclosed subject matter provides a method of preventing malodor in a confined air space that includes introducing any one of the antimicrobial compositions disclosed herein to the confined air space.
Another aspect of the presently disclosed subject matter provides an air sanitizer comprising any one of the antimicrobial compositions disclosed herein. For example, the air sanitizer can be in a form capable of being maintained in close proximity to a toilet rim. The air sanitizer can be in the form of a polymeric bead, an oil or a gel. Yet another aspect of the presently disclosed subject matter provides packaging for foodstuff that includes any one of the antimicrobial compositions disclosed herein.

### BRIEF DESCRIPTION OF THE DRAWINGS

Figure 1 depicts Minimum Inhibitory Concentrations (MIC) of trans-2-octenal and trans-2-octenal and mustard essential oil against gram-negative and gram-positive bacteria.

Figure 2 depicts Minimum Inhibitory Concentrations (MIC) for $C_6$-$C_{11}$ trans-2-alkenals alone and in combination with mustard essential oil against gram-negative and gram-positive bacteria.

DETAILED DESCRIPTION

**Aldehyde Component**

The presently disclosed subject matter provides antimicrobial compositions that include at least one aldehyde component. In one embodiment, the aldehyde component is an aliphatic aldehyde.

In one embodiment, the aldehyde component is an aliphatic $C_6$-$C_{13}$ aldehyde, including unsaturated aliphatic $C_6$-$C_{13}$ aldehydes having 1, 2, 3, 4 or more double bonds (e.g., an aliphatic $C_6$-$C_{13}$ $\alpha$, $\beta$ unsaturated aldehyde). In one embodiment, the aldehyde component is an aliphatic $C_7$-$C_{12}$ aldehyde, including unsaturated aliphatic $C_7$-$C_{12}$ aldehydes having 1, 2, 3, 4 or more double bonds (e.g., an aliphatic $C_7$-$C_{12}$ $\alpha$, $\beta$ unsaturated aldehyde). In one embodiment, the aldehyde component is an aliphatic $C_9$-$C_{13}$ aldehyde, including unsaturated aliphatic $C_9$-$C_{13}$ aldehydes having 1,2,3,4 or more double bonds (e.g., an aliphatic $C_9$-$C_{13}$ $\alpha$, $\beta$ unsaturated aldehyde). In one embodiment, the aldehyde component is an aliphatic $C_7$-$C_{11}$ aldehyde, including unsaturated aliphatic $C_7$-$C_{11}$ aldehydes having 1, 2, 3, 4 or more double bonds (e.g., an aliphatic $C_7$-$C_{11}$ $\alpha$, $\beta$ unsaturated aldehyde). In one embodiment, the aldehyde component is an aliphatic $C_{10}$-$C_{12}$ aldehyde, including unsaturated aliphatic $C_{10}$-$C_{12}$ aldehydes having 1, 2, 3, 4 or more double bonds (e.g., an aliphatic $C_{10}$-$C_{12}$ $\alpha$, $\beta$ unsaturated aldehyde).

In one embodiment, the aldehyde component is straight-chained, and not branched (e.g., a straight-chained unsaturated $C_6$-$C_{13}$ aldehyde, a straight-chained unsaturated $C_7$-$C_{12}$ aldehyde, a straight-chained unsaturated $C_7$-$C_{11}$ aldehyde, a straight-chained unsaturated $C_9$-$C_{13}$ aldehyde, a straight-chained unsaturated $C_{10}$-$C_{12}$ aldehyde, a straight-chained unsaturated $C_{10}$-$C_{12}$ aldehyde).

Also disclosed, the aldehyde component is a branched unsaturated aliphatic aldehyde (e.g., a branched unsaturated $C_6$-$C_{13}$ aldehyde, a branched unsaturated $C_7$-$C_{12}$ aldehyde, a branched unsaturated $C_7$-$C_{11}$ aldehyde, a branched unsaturated $C_9$-$C_{13}$ aldehyde, a branched unsaturated $C_{10}$-$C_{12}$ aldehyde, or a branched unsaturated $C_{10}$-$C_{12}$ aldehyde). In one embodiment the alkyl chain of the branched aliphatic aldehyde is substituted with one or more of methyl, ethyl and/or propyl groups. An example of branched unsaturated aliphatic aldehyde applicable for use in the compositions of the present application include, 2,6-dimethyl-5-heptenal.

Also disclosed, the aldehyde component can be a saturated aldehyde, such as an unbranched (e.g., octanal, nonanal, decanal) or branched (e.g., 2-methyl undecanal) saturated $C_6$-$C_{13}$ aldehyde. Combinations of saturated aldehydes can be employed (e.g., a combination of octanal, nonanal and decanal aldehdyes), or they can be used alone with, or without unsaturated aldehydes (which themselves may be used alone, or in combination). In one embodiment, the aldehyde component is selected from one or more of: hexanal, heptanal, octanal, nonanal, decanal, undecanal, dodecanal, and tridecanal.

Also disclosed, the aldehyde component is a $C_8$ aldehyde (e.g., trans-2-octenal, 2, 4 octadienal). In an alternative embodiment, the aldehyde component is a $C_{12}$ aliphatic aldehyde (e.g., trans-2-dodecenal, 2, 4 dodecadienal, 2-methyl undecanal).

In one embodiment, hexenal, octanal, nonanal, and undecenal are excluded as aldehyde components.

In one embodiment, the aldehyde component is selected from:

trans-2-hexenal:

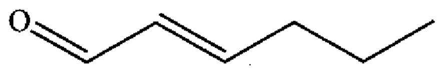

trans-2-heptenal:

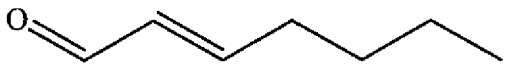

trans-2-octenal:

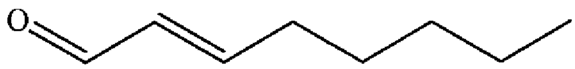

trans-2-nonenal:

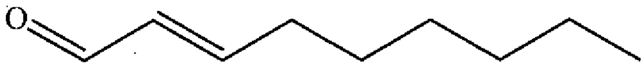

trans-2-decenal:

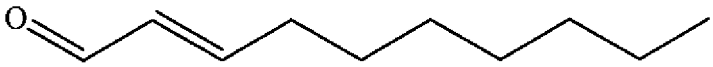

trans-2-undecenal:

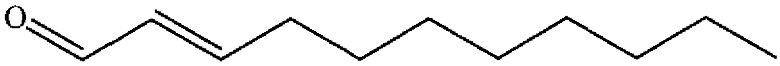

trans-2-dodecenal:

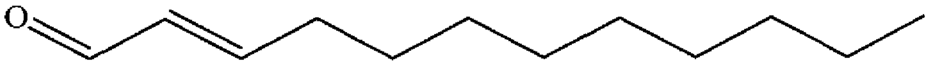

2, 4 hexadienal:

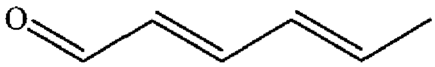

2, 4 heptadienal:

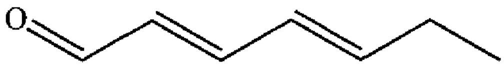

2, 4 octadienal:

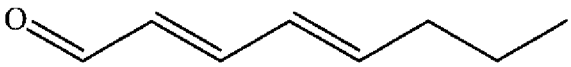

2,4 nonadienal:

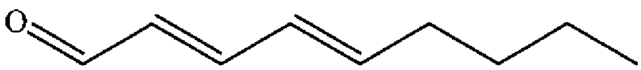

2, 4 decadienal:

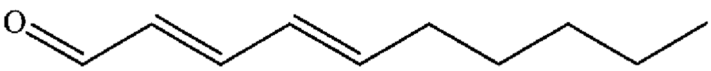

2, 4 undecadienal:

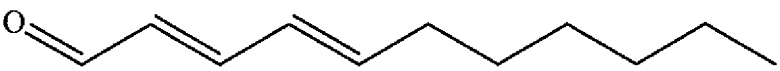

2, 4 dodecadienal

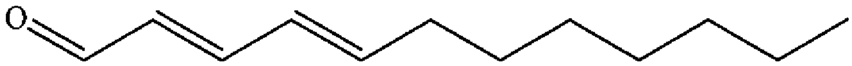

While the above-described aldehyde components can be used in combination with allyl isothiocyanate, it is also disclosed that the antimicrobial composition does not contain allyl isothiocyanate. For example, one embodiment of the presently disclosed subject matter provides a composition that includes from about 5 wt% to about 40% wt%, or from about 8 wt% to about 12 wt%, of one or more aldehyde components described herein (e.g., from about 5 wt% to about 40 wt%, or from about 8 wt% to about 12 wt%, of unsaturated or saturated $C_6$-$C_{13}$ straight-chained or branched aliphatic aldehyde).

## Allyl Isothiocyanate

In addition to an aldehyde component, the presently disclosed antimicrobial compositions can also include allyl isothiocyanate. Allyl isothiocyanate can be obtained, for example, from mustard essential oil, which in turn can be commercially obtained. While amounts will vary depending on the source, mustard essential oil typically contains greater than about 90 wt% of allyl isothiocyanate. Alternatively, allyl isothiocyanate can be added in pure, or relatively pure form to the composition.

Allyl isothiocyanate can also be obtained, for example, from brussels sprouts (about 0.1 mg/kg), cabbage (about 3 mg/kg), cauliflower (about 0.08mg/kg), horseradish (about 1350 mg/kg) and mustard (about 400-15,000mg/kg).

Allyl isothiocyanate can be obtained, for example, by pressing the seeds of brown mustard (*Brassica juncea*) to remove non-volatile oils. The residue of pressed seeds can be macerated with warm, deionized water and allowed to stand. The macerate can be distilled (e.g., via steam distillation) to yield a volatile fraction with >about 95 wt% allyl isothiocyanate.

## Antimicrobial Compositions

Other components suitable for use in an antimicrobial composition, and known to those of ordinary skill in the art, can be added to the antimicrobial compositions of the present application. The antimicrobial compositions of the present application are particularly active in the vapor phase. Thus, other antimicrobial components that are antimicrobially active in solution (i.e., the liquid phase), can be added to presently disclosed compositions to supplement the overall activity of the presently disclosed compositions. Furthermore, it has been found that α, β-unsaturated aldehydes, particularly $C_{9-13}$ α, β-unsaturated aldehydes, are active in solution and thus can be included to provide antimicrobial activity in solution (as well as the vapor phase).

The antimicrobial compositions of the present application can contain, for example, fragrance components, fillers, buffers, preservatives and other additives known to those of ordinary skill in the art. The aldehyde component and allyl isothiocyanate (for example allyl isothiocyanate obtained from mustard essential oil) can be diluted to use concentrations with an appropriate solvent. Since allyl isothiocyanate is decomposed by water, non-aqueous solvents are preferred (e.g., fragrance oils or glycols). Furthermore, the compositions should be stored and processed to avoid high heat, since excessive temperatures (e.g., above 170°C) can also degrade the allyl isothiocyanate.

The compositions can be added to fragrance oils, flavor oils, and essential oils. In addition to liquids, the antimicrobial compositions of the present application can be incorporated within solids, such as plastics, paper and soap/detergent solid blocks (e.g., but not limited to, polymer beads, such as EVA beads, or gels, oils, etc.) according to techniques known to those of ordinary skill in the art.

Use amounts of the aldehyde component, allyl isothiocyanate and other components of the composition can be determined by persons of ordinary skill in the art. As non-limiting examples, the total amount of the aldehyde component(s) in the antimicrobial composition can range from about 2 wt% to about 80 wt%, or from about 5 wt% to about 40 wt%, or from about 20 wt% to about 60 wt%, or from about 30 wt% to about 50 wt%, based on the total weight of the antimicrobial composition.

As non-limiting examples, the total amount of the allyl isothiocyanate in the antimicrobial composition can range from about 0.0001 wt% to about 40 wt%, or from about 0.1 wt% to about 5 wt%, or from about 0.05 wt% to about 0.5 wt%, based on the total weight of the antimicrobial composition.

Based on the efficacy of combining the aldehyde component with allyl isothiocyanate, the antimicrobial compositions can contain less allyl isothiocyanate (and when obtained from mustard oil, less mustard oil) than antimicrobial compositions of the prior art that contain allyl isothiocyanate, but do not contain an aldehyde component.

In embodiments which the allyl isothiocyanate is obtained from mustard essential oil, the weight ratio of the

total amount of aldehyde component to mustard essential oil can range, for example, from about 0.1:1 to about 500:1, or from about 0.1:1 to about 100:1 (e.g., 50:1), or from about 0.5:1 to about 5:1 (e.g., about 1:1, or 3:1). Other ratios can be used depending on, among other things, the end use of the antimicrobial composition and the other components of the composition.

The antimicrobial compositions of the present application have been found to exhibit antimicrobial activity in the vapor phase against both gram-positive bacteria (e.g., *Staphylococcus aureus, Enterococcus faecalis, Enterococcus hirae*) and gram-negative bacteria (e.g., *Escherichia coli, Salmonella enterica, Pseudomonas aeruginosa*).

## Applications

The presently disclosed anti-microbial compositions can be employed in any application in which it is desired to reduce bacterial activity, such as, for example, as bathroom and kitchen cleaning and deodorizing products (e.g., as a dishwasher deodorizer for use in a dishwasher to reduce malodor). The presently disclosed compositions can be employed, for example, as a preservative for foodstuff, for malodor control (e.g., as an air sanitizer for a confined space), and as an antimicrobial agent. Because of the high vapor phase activity of the presently disclosed compositions, they are particularly suitable in enclosed spaces, such as bathroom applications (e.g., around the toilet), in locker rooms, closets and other confined spaces in which vapors emanating from the composition can be retained for a time sufficient to reduce bacterial activity.

Preferred applications include employing the compositions to control bacteria and/or malodor for use in small spaces/small rooms, and for use in dishwashers, refrigerator, garbage pails, sink garbage disposals, toilet bowls (e.g., as a toilet rim deodorizer), laundry hampers, diaper pails, closets, show boxes, (clothes/fabric) storage boxes, cat litter, pet litter boxes, pet cages, pet bedding, gym lockers, gym bags, sneakers, shoes, etc.

One embodiment of the presently disclosed subject matter provides a method of reducing the activity of *Enterococcus hirae,* comprising applying a composition that includes a $C_9$ to $C_{13}$ aldehyde component, such as any one of the $C_9$ to $C_{13}$ aldehyde components disclosed herein (or a combination thereof). Another embodiment of the presently disclosed subject matter provides a method of reducing the activity of *Staphylococcus aureaus,* comprising applying a composition that includes a $C_{10}$ to $C_{12}$ aldehyde component, such as any one of the $C_{10}$ to $C_{12}$ aldehyde components disclosed herein (or a combination thereof).

Based on the surprising benefits obtained from combining an aldehyde component with allyl isothiocyanate, one benefit of the presently disclosed compositions is that the amount of mustard essential oil required to provide active levels of allyl isothiocyanate can be reduced. Accordingly, one embodiment of the present application provides a method of increasing the antimicrobial activity of a composition containing allyl isothiocyanate (e.g., a composition containing mustard essential oil) that includes adding at least one, or a combination of aldehyde components to the composition, in which the aldehyde component can include any one of the presently described aldehyde components.

## EXAMPLES

The present invention is further described by means of the examples, presented below.

### Example 1

Seeded brain heart infusion (BHI) agar plates of *Escherichia coli* ATCC 10536, *Salmonella enterica* ATCC 13311, *Pseudomonas aeruginosa* ATCC 15422, *Staphylococcus aureus* ATCC 6538, *Enterococcus faecalis* ATCC 29212, and *Enterococcus hirae* ATCC 10541 were placed in sealed 7L acrylic boxes and exposed to vapors of trans-2-alkenals ($C_6$ to $C_{11}$ carbon chain length) and mustard essential oil (MEO) binary combinations.

The trans-2-alkenals and MEO were weighed neat into a glass jar which was positioned in the box between the seeded agar plates. Tue concentration of the single materials and binary combinations introduce in the 7L box were expressed a weight per unit volume of the box (mg/L). Several concentrations ranging from 0.5 mg/L to 43 mg/L of the single materials and combinations were tested for each organism. The vapor phase minimum inhibition concentration (MIC) with "no growth" after 3 days of incubation at room temperature. Fractional Inhibition Concentrations (FIC) was determined to evaluate the antibacterial effect of trans-2-alkenals and MEO combinations in the vapor phase based on the following formula:

$$\text{Combined FIC} = (\text{MIC of trans-2-alkenal}_{\text{combination}}/\text{MIC of trans-2-alkenal}_{\text{alone}}) + (\text{MIC of MEO}_{\text{combination}}/\text{MIC of MEO}_{\text{alone}})$$

MIC's of the trans-2-alkenal$_{comnbination}$ was determined by starting with one-half or one-quarter of the MIC of the trans-2-alkenal$_{alone}$ and one-half or one-quarter of the MIC of the MEO$_{alone}$ for the particular bacteria tested, and stepping down the concentration of the aldehyde until the minimum concentration is achieved such that the agar plate showed no bacterial growth (as observed by the naked eye). MIC's of the MEO$_{combination}$ was determined by starting with one-half or one-quarter of the MIC of the trans-2-alkenal$_{alone}$ and one-half or one-quarter of the MIC of the MEO$_{alone}$, and stepping down the concentration of the MEO until the minimum concentration is reached such that the agar plate showed no bacterial growth (as observed by the naked eye).

Combined FIC values for trans-2-alkenals and MEO combinations are shown below in Table 1. Combinations with combined FIC equal or less than 0.5 are considered to have a strong synergistic effect. Combinations with combined FIC equal to or less than 1, but greater than 0.5 are considered to exhibit synergistic properties.

**Table 1: Combined FIC values for trans-2-alkenals and MEO combinations (vapor phase)**

| | trans-2-hexenal + MEO | trans-2-heptenal + MEO | trans-2-octenal + MEO | trans-2-nonenal + MEO | trans-2-decenal + MEO | trans-2-undecenal + MEO |
|---|---|---|---|---|---|---|
| *P. a.* ATCC 15422 | 0.6 | 0.5 | 0.5 | 0.5 | 0.5 | 0.5 |
| *S. e.* ATCC 13311 | 1.0 | 1.0 | 0.5 | 0.5 | 0.5 | 0.5 |
| *E. c.* ATCC 10536 | 1.0 | 1.0 | 0.5 | 0.8 | 0.9 | 0.5 |
| *E. f.* ATCC 29212 | 1.1 | 1.3 | 0.4 | 0.8 | 0.8 | 0.8 |
| *E. h.* ATCC 10541 | 0.8 | 0.8 | 0.5 | 0.8 | 0.8 | 0.8 |
| *S. a.* ATCC 6538 | 0.8 | 1.0 | 1.0 | 0.8 | 0.9 | 0.8 |

MIC values used to obtain the FIC values in Table 1 is shown in Tables 2-5, below:

**Table 2: Combined MIC and FIC values for trans-2-alkenals and MEO combinations - *E.h.* 10541 (vapor phase)**

| | MIC trans-2-alkenal alone (mg/L) | MIC trans-2-alkenal in combination with MEO (mg/L) | MIC MEO alone (mg/L) | MIC MEO in combination (mg/L) | Combined FIC |
|---|---|---|---|---|---|
| trans-2-hexenal + MEO | 12.8 | 3.6 | 12.8 | 6.4 | 0.8 |
| trans-2-heptenal + MEO | 12.8 | 6.4 | 12.8 | 3.6 | 0.8 |
| trans-2-octenal + MEO | 25.6 | 6.4 | 12.8 | 3.6 | 0.5 |
| trans-2-nonenal + MEO | 6.4 | 3.6 | 12.8 | 3.6 | 0.8 |

(continued)

| | MIC trans-2-alkenal alone (mg/L) | MIC trans-2-alkenal in combination with MEO (mg/L) | MIC MEO alone (mg/L) | MIC MEO in combination (mg/L) | Combined FIC |
|---|---|---|---|---|---|
| trans-2-decenal + MEO | 6.4 | 3.6 | 12.8 | 3.6 | 0.8 |
| trans-2-undecenal + MEO | 12.8 | 6.4 | 12.8 | 3.6 | 0.8 |

**Table 3: Combined MIC and FIC values for trans-2-alkenals and MEO combinations - *E.f.* 29212 (vapor phase)**

| | MIC trans-2-alkenal alone (mg/L) | MIC trans-2-alkenal in combination with MEO (mg/L) | MIC MEO alone (mg/L) | MIC MEO in combination (mg/L) | Combined FIC |
|---|---|---|---|---|---|
| trans-2-hexenal + MEO | 6.4 | 3.6 | 12.8 | 6.4 | 1.1 |
| trans-2-heptenal + MEO | 6.4 | 6.4 | 12.8 | 3.6 | 1.3 |
| trans-2-octenal + MEO | 43.0 | 3.6 | 12.8 | 3.6 | 0.4 |
| trans-2-nonenal + MEO | 6.4 | 3.6 | 12.8 | 3.6 | 0.8 |
| trans-2-decenal + MEO | 6.4 | 3.6 | 12.8 | 3.6 | 0.8 |
| trans-2-undecenal + MEO | 12.8 | 6.4 | 12.8 | 3.6 | 0.8 |

**Table 4: Combined MIC and FIC values for trans-2-alkenals and MEO combinations - *P.a.* 15442 (vapor phase)**

| | MIC trans-2-alkenal alone (mg/L) | MIC trans-2-alkenal in combination with MEO (mg/L) | MIC MEO alone (mg/L) | MIC MEO in combination (mg/L) | Combined FIC |
|---|---|---|---|---|---|
| trans-2-hexenal + MEO | 12.8 | 1.8 | 2.0 | 1.0 | 0.6 |
| trans-2-heptenal + MEO | 25.6 | 1.0 | 2.0 | 1.0 | 0.5 |
| trans-2-octenal + MEO | 43.0 | 1.8 | 2.0 | 1.0 | 0.5 |

(continued)

| | MIC trans-2-alkenal alone (mg/L) | MIC trans-2-alkenal in combination with MEO (mg/L) | MIC MEO alone (mg/L) | MIC MEO in combination (mg/L) | Combined FIC |
|---|---|---|---|---|---|
| trans-2-nonenal + MEO | 43.0 | 0.9 | 2.0 | 1.0 | 0.5 |
| trans-2-decenal + MEO | 43.0 | 1.8 | 2.0 | 1.0 | 0.5 |
| trans-2-undecenal + MEO | 43.0 | 1.8 | 2.0 | 1.0 | 0.5 |

**Table 5: Combined MIC and FIC values for trans-2-octenal formulations (vapor phase)**

| | MIC trans-2-octenal alone | MIC trans-2-octenal in combination with MEO | MIC MEO alone | MIC MEO in combination | Combined FIC |
|---|---|---|---|---|---|
| *P.a.* 15442 | 43.0 | 1.8 | 2.0 | 1.0 | 0.5 |
| *S.e.* 13311 | 43.0 | 1.8 | 2.0 | 1.0 | 0.5 |
| *E.c.* 10536 | 43.0 | 1.8 | 2.0 | 1.0 | 0.5 |
| *E.f.* 29212 | 43.0 | 6.4 | 12.8 | 3.6 | 0.4 |
| *E.h.* 10541 | 25.6 | 6.4 | 12.8 | 3.6 | 0.5 |
| *S.a.* 6538 | 3.6 | 1.8 | 2.0 | 1.0 | 1.0 |

MIC's of trans-2-octenal, alone and in combination with MEO, in the vapor phase against agar plates of *Escherichia coli* ATCC 10536, *Salmonella enterica* ATCC 13311, *Pseudomonas aeruginosa* ATCC 15422, *Staphylococcus aureus* ATCC 6538, *Enterococcus faecalis* ATCC 29212, and *Enterococcus hirae* ATCC 10541 are shown in Figure 1. The MIC to inhibit the growth of *Pseudomonas aeruginosa* ATCC 15422 and *Enterococcus hirae* ATCC 10541 in the vapor phase is shown in Figure 2.

As shown above, binary combinations of $\alpha$, $\beta$-unsaturated aliphatic aldehydes and MEO showed a synergistic effect in the vapor phase to inhibit the growth of bacteria. Higher chain lengthed aldehydes showed a higher activity against the gram positive bacteria in this example (*Staphylococcus aureus* ATCC 6538, *Enterococcus faecalis* ATCC 29212, and *Enterococcus hirae* ATCC 10541).

MIC values were also determined for trans-2 octenal, octanal formulations, and MEO in solution and in the vapor phase. The results are shown below in Table 6.

**Table 6: MIC values for trans-2-octenal and octanal formulations in vapor phase and in solution**

| | trans-2-octenal in vapor phase (mg/L) | octanal in vapor phase (mg/L) | MEO alone in vapor phase (mg/L) | trans-2-octenal in solution (mg/L) | octanal in solution (mg/L) | MEO in solution (mg/L) |
|---|---|---|---|---|---|---|
| P.a. 15442 | 43.0 | 84.8 | 2.0 | >125 | >125 | >62.5 |

(continued)

| | trans-2-octenal in vapor phase (mg/L) | octanal in vapor phase (mg/L) | MEO alone in vapor phase (mg/L) | trans-2-octenal in solution (mg/L) | octanal in solution (mg/L) | MEO in solution (mg/L) |
|---|---|---|---|---|---|---|
| S.e. 13311 | 43.0 | 42.4 | 2.0 | >125 | >125 | >62.5 |
| E.c. 10536 | 43.0 | 21.1 | 2.0 | >125 | >125 | >62.5 |
| E.f. 29212 | 43.0 | 42.4 | 12.8 | >125 | >125 | >62.5 |
| E.h. 10541 | 25.6 | 42.4 | 12.8 | >125 | >125 | >62.5 |
| S.a. 6538 | 3.6 | 7.8 | 2.0 | >125 | >125 | >62.5 |

Table 6 indicates that the tested compositions active in the vapor phase, but not in solution. This demonstrates that antibacterial activity in the vapor phase is distinct from activity in solution. When creating compositions with antibacterial activity, one or more active materials can be selected. Materials active in the vapor phase may not be active in solution (and vice versa). To provide compositions with activity in the vapor phase, consideration need only given to materials that are active in the vapor phase -- its' activity in solution is not a consideration. The reverse also holds for compositions active in solution. Therefore active compositions that demonstrate activity in the vapor phase are expected to be quite different from active compositions that demonstrate activity in solution. The differences are not simply due to test methods as both test for antibacterial activity. While not being bound by any particular theory, research suggests that the mechanism of antibacterial activity in the vapor phase and activity in solution is distinct and different from activity in solution. The molecular and/or structural targets on the bacteria can be different.

**Example 2 (not according to the invention)**

Seeded brain heart infusion (BHI) agar plates of *Escherichia coli* ATCC 10536, *Salmonella enterica* ATCC 13311, *Pseudomonas aeruginosa* ATCC 15422, *Staphylococcus aureus* ATCC 6538, *Enterococcus faecalis* ATCC 29212, and *Enterococcus hirae* ATCC 10541 were placed in sealed 7L acrylic boxes and exposed to vapors of the compositions shown below. A control was established in which the agar plates was not treated with vapors.

Composition A: 9.3 mg/L of trans-2-hexenal
Composition B: 9.3 mg/L of trans-2-heptenal
Composition C: 9.3 mg/L of 2, 4-heptadienal
Composition D: 7.1 mg/L of trans-2-hexenal
Composition E: 7.1 mg/L of 2,4-heptadienal
Composition F: 7.1 mg/L of 2,4-heptadienal + citronellol (1:1)
Composition G: 9.3 mg/L of citronellal + citral DMA (1:1)
Composition H: 9.3 mg/L of benzaldehyde + citral DMA (1:1)
Composition I: 9.3 mg/L of furfural + citronellol (1:1)
Composition J: 7.1 mg/L of citral + citronellal (1:1)
Composition K: 7.1 mg/L of trans-2-hexenal + citronellol (1:1)

The following results were obtained:

**Table 7: Vapor Phase Activity Against Bacteria**

| | S.a. 6538 | E.f. 29212 | E.h 10541 | E.c. 10536 | S.e. 13311 | P.a. 15442 |
|---|---|---|---|---|---|---|
| Composition A | +++ | +++ | + | +++ | +++ | +++ |
| Composition B | +++ | +++ | +++ | +++ | +++ | + |
| Composition C | +++ | +++ | + | +++ | +++ | +++ |

(continued)

| | S.a. 6538 | E.f. 29212 | E.h 10541 | E.c. 10536 | S.e. 13311 | P.a. 15442 |
|---|---|---|---|---|---|---|
| Composition D | +++ | +++ | + | +++ | +++ | +++ |
| Composition E | +++ | ++ | + | +++ | +++ | ++ |
| Composition F | +++ | - | - | - | - | - |
| Composition G | - | - | - | - | - | - |
| Composition H | ++ | - | - | - | - | - |
| Composition I | - | - | - | - | - | - |
| Composition J | +++ | - | - | - | - | - |
| Composition K | +++ | - | - | ++ | ++ | |
| KEY: - No Activity (growth)<br>+ Slight Activity (some growth, but much less than control)<br>++ Medium Activity (pinprick growth)<br>+++ High Activity (no growth) | | | | | | |

**Example 3 (not according to the invention)**

A detergent base was obtained based on a commercially-available gel detergent product and used as a positive control. To the positive control was added, in separate trials, a fragrance composition containing 0.2 wt% of trans-2-nonenal, trans-2-decenal, trans-2-undecenal, trans-2-dodecenal, and trans-2-tridecenal aldehydes.

The activity log reduction of these compositions was determined against *Enterococcus hirae* ATCC 10541 and *Staphylococcus aureus* ATCC 6538 in solution. Each 1 gram of product was diluted with 116 grams of water, stirred with a stir bar for about 10 minutes. An aliquot was added with bacteria, mixed on a vortex mixer and placed in a 50°C water bath. After 1 hour, sample was diluted in D/E Neutralization broth (Dey and Engley) and plated onto solid media. Surviving bacteria was counted after 1 day incubation at 37°C The results are shown below in Table 8.

**Table 8: Activity Log Reduction of *Enterococcus hirae* ATCC 10541 and *Staphylococcus aureus* ATCC 6538 in solution**

| Composition Tested | *Enterococcus hirae* ATCC 10541 | *Staphylococcus aureus* ATCC 6538 |
|---|---|---|
| Detergent base (control) | 1.5 | 3.1 |
| + trans-2-nonenal | 2.2 | 3.9 |
| + trans-2-decenal | 3.6 | >5 |
| + trans-2-undecenal | 4.8 | 4.7 |
| + trans-2-dodecenal | >5 | >5 |
| + trans-2-tridecenal | >5 | 3.9 |

The activity log reduction of a fragrance composition containing trans-2-dodecenal was tested when used in increasing amounts from 0.3% to 0.5%. The composition was tested against *Pseudomonas aeruginosa* ATCC 15422, *Escherichia coli* ATCC 10536, *Staphylococcus aureus* ATCC 6538, and *Enterococcus hirae* ATCC 10541. The results are shown below in Table 9, in which the anti-microbial composition decreased bacterial activity in a dose-related manner, while providing a hedonically appealing fragrance.

**Table 9: Activity log reduction of a fragrance composition containing trans-2-dodecenal**

| | *Pseudomonas aeruginosa* ATCC 15422 | *Escherichia coli* ATCC 10536 | *Staphylococcus aureus* ATCC 6538 | *Enterococcus hirae* ATCC 10541 |
|---|---|---|---|---|
| Detergent base (control) | >5 | >5 | 2 | 1 |

(continued)

| | *Pseudomonas aeruginosa* ATCC 15422 | *Escherichia coli* ATCC 10536 | *Staphylococcus aureus* ATCC 6538 | *Enterococcus hirae* ATCC 10541 |
|---|---|---|---|---|
| Base + 0.3% Table 8 trans-2-dodecenal composition | >5 | >5 | 4 | 3 |
| Base + 0.4% Table 8 trans-2-dodecenal composition | >5 | >5 | >5 | 3.5 |
| Base + 0.5% Table 8 trans-2-dodecenal composition | >5 | >5 | >5 | >5 |

**Example 4 (not according to the invention)**

The following composition was prepared by mixing the following components, in which the percentages are weight percent.

**Table 10: Antibacterial Aldehyde-Containing Composition with Fragrance Components**

| Component | Amount (wt %) |
|---|---|
| decanal | 36% |
| octanal | 2% |
| nonanal | 2% |
| citronellyl acetate (available from Takasago Int'l Corp.) | 13% |
| citronellyl nitrile (available from Takasago Int'l Corp.) | 8% |
| dh citronellal (@10%) (available from Takasago Int'l Corp.) | 3% |
| ethyl butyrate | 1% |
| hindinol (available from Takasago Int'l Corp.) | 1% |
| iso propoxy ethyl salicylate (available from Takasago Int'l Corp.) | 15% |
| linalyl acetate synthetic | 9% |
| terpinyl acetate | 10% |
| 3,5,5-trimethylhexyl acetate | 1% |

This composition was shown to have antibacterial activity against all of the bacteria tested, including gram-negative and gram-positive bacteria.

## Claims

**1.** An antimicrobial composition comprising:

(a) at least one aliphatic aldehyde component which is a $C_6$-$C_{13}$ straight chained aliphatic aldehyde; and
(b) allyl isothiocyanate.

**2.** The antimicrobial composition of claim 1, wherein the at least one aliphatic aldehyde component is unsaturated.

**3.** The antimicrobial composition of claim 2, wherein the at least one aliphatic aldehyde component is an $\alpha, \beta$ unsaturated aldehyde.

**4.** The antimicrobial composition of claim 1 comprising at least one aliphatic aldehyde component, wherein the at least one aliphatic aldehyde component is selected from the group consisting of:

trans-2-hexenal:

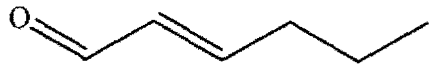

trans-2-heptenal:

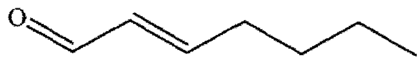

trans-2-octenal:

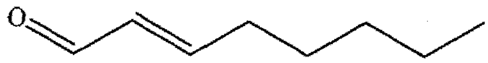

trans-2-nonenal:

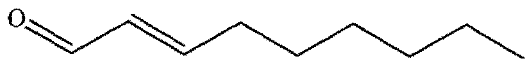

trans-2-decenal:

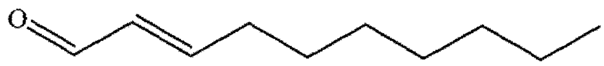

trans-2-undecenal:

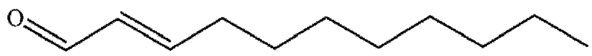

trans-2-dodecenal :

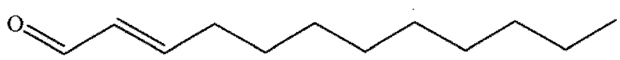

2, 4 hexadienal

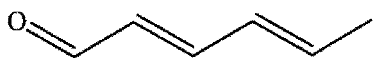

2, 4 heptadienal:

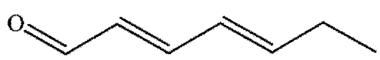

2, 4 octadienal:

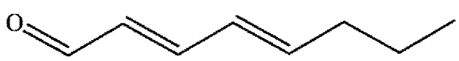

2,4 nonadienal

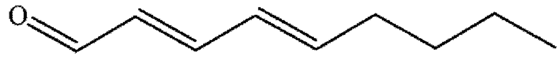

2, 4 decadienal

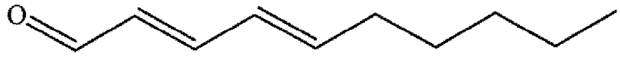

2, 4 undecadienal

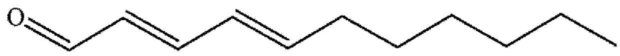

2, 4 dodecadienal

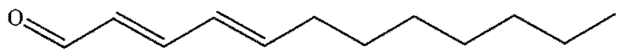

.

5. A non-therapeutic method of reducing the bacterial activity of an environment comprising applying an antimicrobial composition of any one of claims 1 to 4.

6. The non-therapeutic method of claim 5, wherein gram-positive bacteria is reduced.

7. The non-therapeutic method of claim 5, wherein gram-negative bacteria is reduced.

8. The non-therapeutic method of claim 5, wherein the antimicrobial composition is allowed to evaporate within a confined space and is active in the vapor phase.

9. A method of preserving a product against spoilage comprising introducing an antimicrobial composition of any one of claims 1 to 4 to the product.

10. A method of preventing malodor in a confined air space comprising introducing an antimicrobial composition of any one of claims 1 to 4 to the confined air space.

11. An air sanitizer comprising the composition of any one of claims 1 to 4.

12. The air sanitizer of claim 11, wherein the air sanitizer is in a form capable of being maintained in close proximity to a toilet rim.

13. The air sanitizer of claim 11, wherein the air sanitizer is in the form of a polymeric bead, an oil or a gel.

14. Packaging for foodstuff comprising the composition of any one of claims 1 to 4.

**Patentansprüche**

1. Antimikrobielle Zusammensetzung umfassend:

(a) mindestens eine aliphatische Aldehydkomponente, die ein geradkettiges aliphatisches $C_6$-$C_{13}$-Aldehyd ist; und
(b) Allylisothiocyanat.

2. Antimikrobielle Zusammensetzung nach Anspruch 1, wobei die mindestens eine aliphatische Aldehydkomponente ungesättigt ist.

3. Antimikrobielle Zusammensetzung nach Anspruch 2, wobei die mindestens eine aliphatische Aldehydkomponente ein $\alpha$, $\beta$-ungesättigtes Aldehyd ist.

**4.** Antimikrobielle Zusammensetzung nach Anspruch 1, umfassend mindestens eine aliphatische Aldehydkomponente, wobei die mindestens eine aliphatische Aldehydkomponente aus der Gruppe ausgewählt ist bestehend aus:

trans-2-Hexenal:

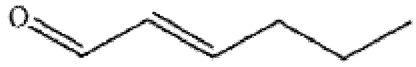

trans-2-Heptenal:

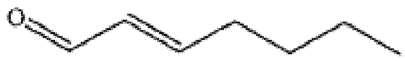

trans-2-Octenal:

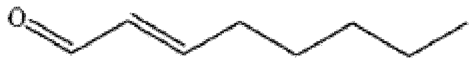

trans-2-Nonenal:

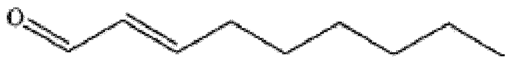

trans-2-Decenal:

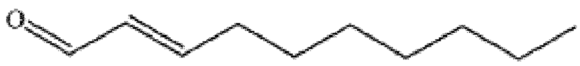

trans-2-Undecenal:

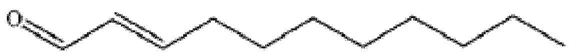

trans-2-Dodecenal:

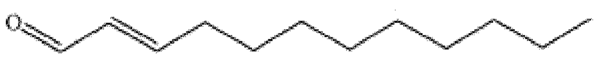

2,4-Hexadienal:

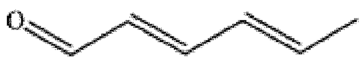

2,4-Heptadienal:

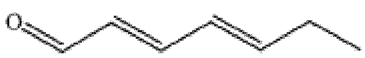

2,4-Octadienal:

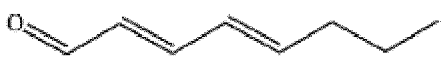

2,4-Nonadienal:

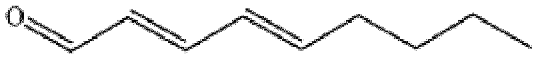

2,4-Decadienal:

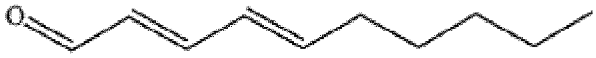

2,4-Undecadienal:

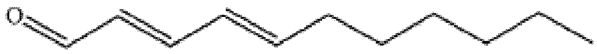

2,4-Dodecadienal:

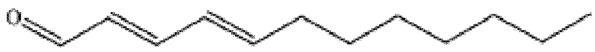

.

5. Nichttherapeutisches Verfahren zum Reduzieren der Bakterienaktivität einer Umgebung, umfassend das Aufbringen einer antimikrobiellen Zusammensetzung nach einem der Ansprüche 1 bis 4.

6. Nichttherapeutisches Verfahren nach Anspruch 5, wobei grampositive Bakterien reduziert werden.

7. Nichttherapeutisches Verfahren nach Anspruch 5, wobei gramnegative Bakterien reduziert werden.

8. Nichttherapeutisches Verfahren nach Anspruch 5, wobei der antimikrobiellen Zusammensetzung gestattet wird, innerhalb eines engen Raums zu verdampfen und die in der Dampfphase aktiv ist.

9. Verfahren zum Schützen eines Produkts gegen Verderben, umfassend das Einführen einer antimikrobiellen Zusammensetzung nach einem der Ansprüche 1 bis 4 in das Produkt.

10. Verfahren zum Verhindern von schlechtem Geruch in einem engen Raum, umfassend das Einführen einer antimikrobiellen Zusammensetzung nach einem der Ansprüche 1 bis 4 in den engen Raum.

11. Luftdesinfektionsmittel umfassend die Zusammensetzung nach einem der Ansprüche 1 bis 4.

12. Luftdesinfektionsmittel nach Anspruch 11, wobei das Luftdesinfektionsmittel in einer Form vorliegt, die in der Lage ist, in nächster Nähe zu einem Toilettenrand gehalten zu werden.

13. Luftdesinfektionsmittel nach Anspruch 11, wobei das Luftdesinfektionsmittel in Form einer polymeren Perle, eins Öls oder Gels vorliegt.

14. Verpackung für Lebensmittel umfassend die Zusammensetzung nach einem der Ansprüche 1 bis 4.

**Revendications**

1. Composition antimicrobienne, comprenant :

   (a) au moins un composant d'aldéhyde aliphatique qui est un aldéhyde aliphatique à chaîne linéaire en $C_6$-$C_{13}$ ; et
   (b) de l'isothiocyanate d'allyle.

2. Composition antimicrobienne selon la revendication 1, dans laquelle le au moins un composant d'aldéhyde aliphatique est insaturé.

3. Composition antimicrobienne selon la revendication 2, dans laquelle le au moins un composant d'aldéhyde aliphatique est un aldéhyde $\alpha,\beta$-insaturé.

4. Composition antimicrobienne selon la revendication 1 comprenant au moins un composant d'aldéhyde aliphatique, dans laquelle le au moins un composant d'aldéhyde aliphatique est choisi dans le groupe constitué par :

le trans-2-hexénal :

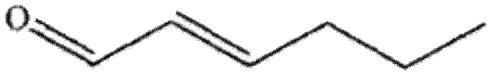

le trans-2-hepténal :

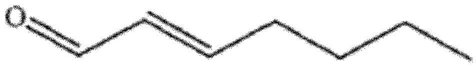

le trans-2-octénal :

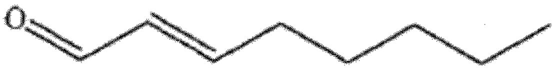

le trans-2-nonénal :

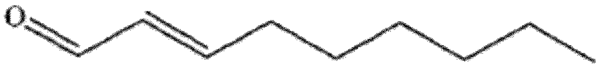

le trans-2-décénal :

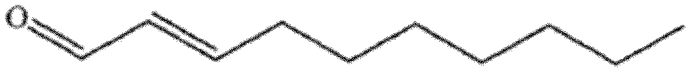

le trans-2-undécénal :

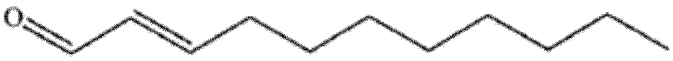

le trans-2-dodécénal :

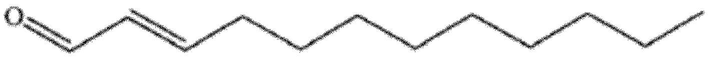

le 2,4-hexadiénal :

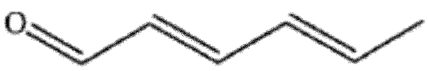

le 2,4-heptadiénal :

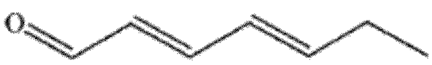

le 2,4-octadiénal :

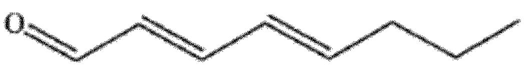

le 2,4-nonadiénal :

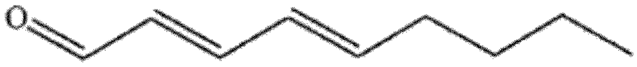

le 2,4-décadiénal :

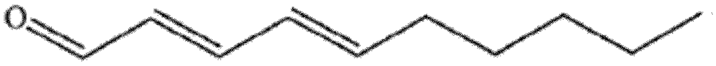

le 2,4-undécadiénal :

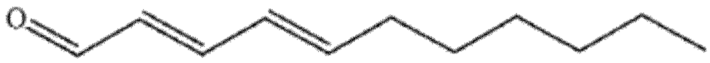

le 2,4-dodécadiénal :

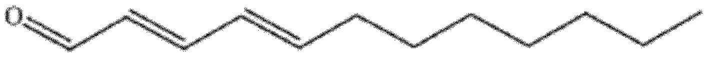

**5.** Méthode non thérapeutique de réduction de l'activité bactérienne d'un environnement, comprenant l'application d'une composition antimicrobienne selon l'une quelconque des revendications 1 à 4.

**6.** Méthode non thérapeutique selon la revendication 5, dans laquelle les bactéries à Gram positif sont réduites.

**7.** Méthode non thérapeutique selon la revendication 5, dans laquelle les bactéries à Gram négatif sont réduites.

**8.** Méthode non thérapeutique selon la revendication 5, dans laquelle on laisse la composition antimicrobienne s'évaporer au sein d'un espace confiné et elle est active dans la phase vapeur.

**9.** Méthode de protection d'un produit contre une altération, comprenant l'introduction d'une composition antimicrobienne selon l'une quelconque des revendications 1 à 4 au produit.

**10.** Méthode de prévention de mauvaises odeurs dans un espace d'air confiné, comprenant l'introduction d'une composition antimicrobienne selon l'une quelconque des revendications 1 à 4 dans l'espace d'air confiné.

**11.** Assainisseur d'air comprenant la composition selon l'une quelconque des revendications 1 à 4.

**12.** Assainisseur d'air selon la revendication 11, où l'assainisseur d'air se trouve sous une forme capable d'être maintenue à proximité d'un rebord de cuvette de toilettes.

**13.** Assainisseur d'air selon la revendication 11, où l'assainisseur d'air se trouve sous la forme d'une bille polymère, d'une huile ou d'un gel.

**14.** Emballage pour produit alimentaire, comprenant la composition selon l'une quelconque des revendications 1 à 4.

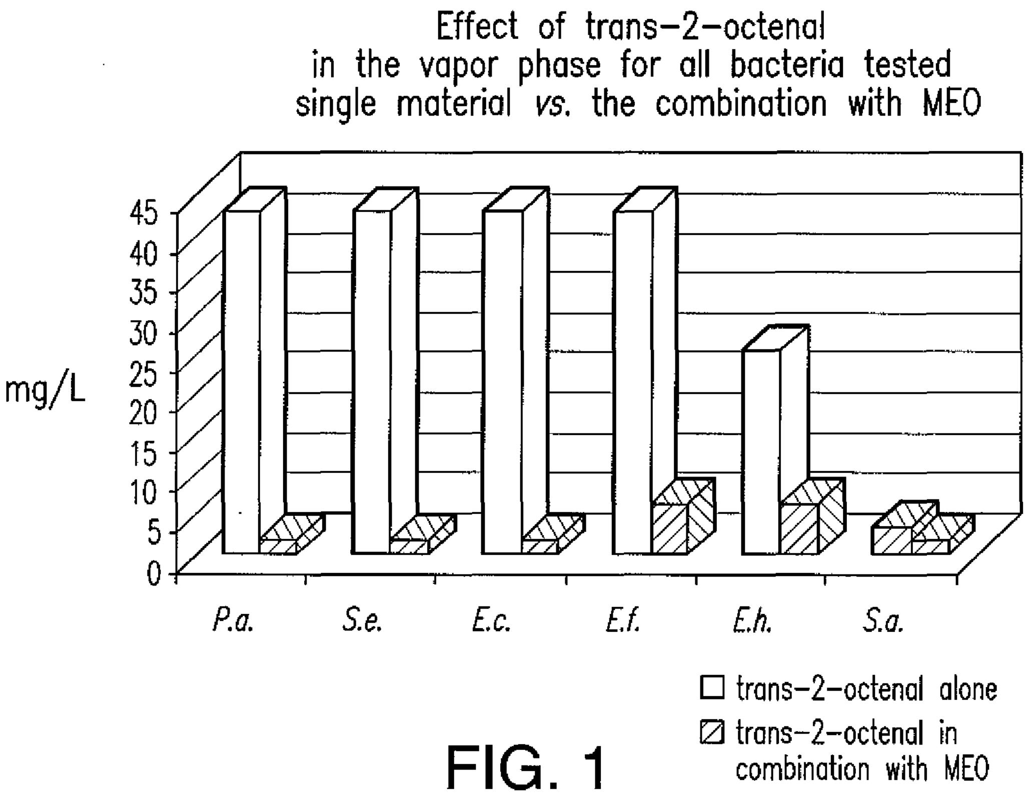
Effect of trans-2-octenal
in the vapor phase for all bacteria tested
single material *vs.* the combination with MEO
mg/L
45
40
35
30
25
20
15
10
5
0
P.a.
S.e.
E.c.
E.f.
E.h.
S.a.
trans-2-octenal alone
trans-2-octenal in combination with MEO

FIG. 1

MIC concentration to inhibit the growth of *P.aeruginosa* 15442 in the vapor phase. Single material *vs.* the combination with MEO across the C-6 to C-11 chain length

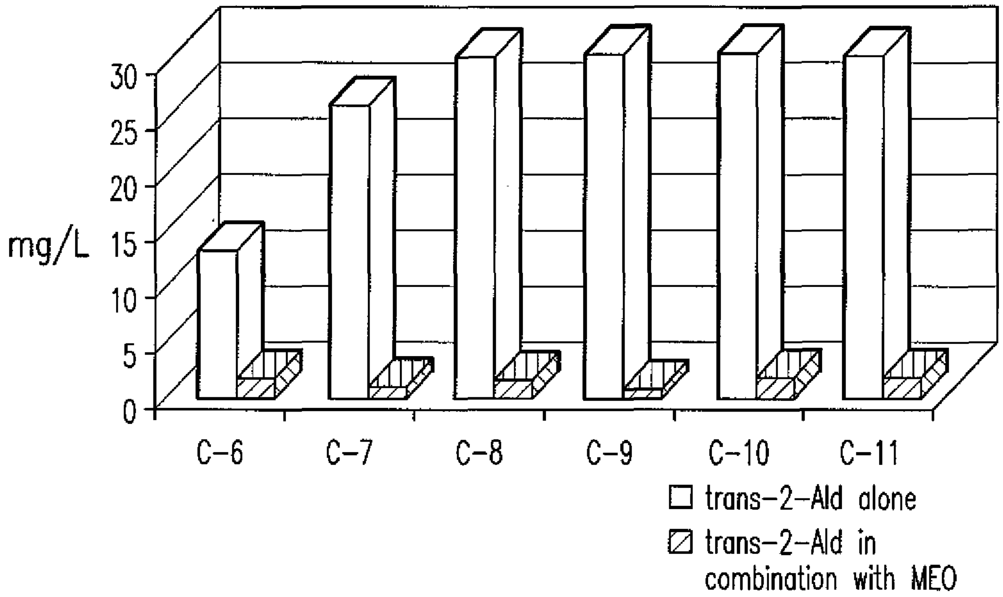


MIC concentration to inhibit the growth of *E. hirae* 10541 in the vapor phase. Single material *vs.* the combination with MEO across the C-6 to C-11 chain length

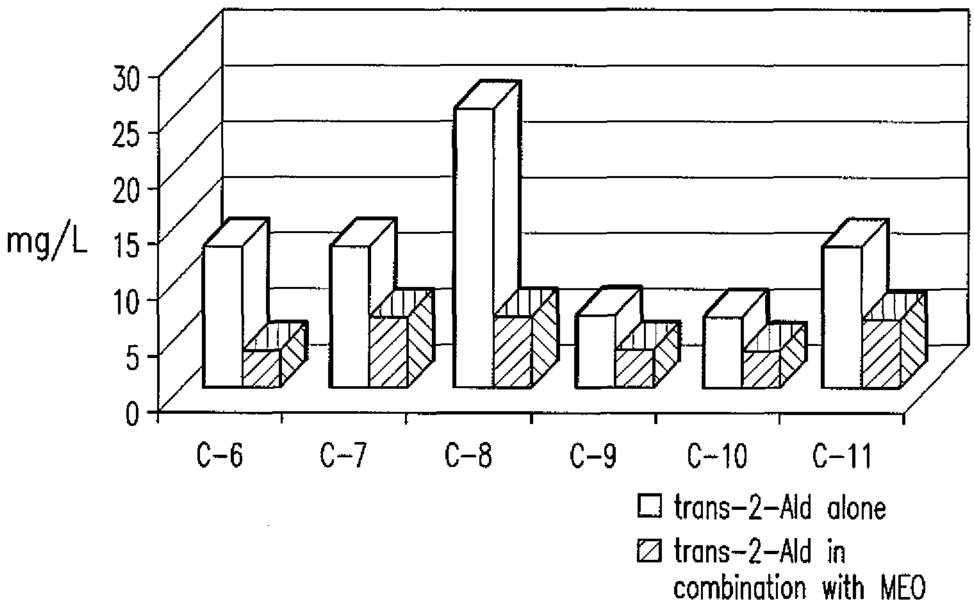


FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 9922751 A